# EUROPEAN PATENT APPLICATION

(11) **EP 2 075 981 A1**
(43) Date of publication of application: **01.07.2009**
(21) Application number: 07817345.7
(22) Date of filing: 30.11.2007
(51) Int. Cl.: H04L 29/06

(54) **A METHOD AND DEVICE FOR AVOIDING LABEL COLLISION WHEN PBT IS CONTROLLED BY GMPLS**

(30) Priority: 27.12.2006 CN 200610157775
(71) Applicant: Huawei Technologies Co., Ltd., Shenzhen, Guangdong Province 518129 (CN)
(72) Inventor: GUAN, Hongguang, Shenzhen Guangdong 518129 (CN)
(74) Representative: Thun, Clemens
(86) International application number: PCT/CN2007/071155
(87) International publication number: WO 2008/077340

(57) **Abstract**

A method for avoiding label collision in PBT controlled by GMPLS is provided. The method is as follows. A label to be assigned is selected for a label switched path (LSP) to be established. It is judged whether the label selected from labels to be assigned is repeated with assigned labels. Another label is selected from the labels to be assigned if the label selected from labels to be assigned is repeated with the assigned labels; and the selected label is used as the label of the LSP if the label selected from labels to be assigned is not repeated with the assigned labels. A device for avoiding label collision includes a label selecting module adapted to select a label to be assigned for an LSP to be established, a label judging module adapted to judge whether the label is repeated with assigned labels, and a label assigning module adapted to assign the label to the LSP for use. Thus, the problem of label collision in PBT controlled by GMPLS is effectively solved.

## Description

### CROSS-REFERENCE TO RELATED APPLICATIONS

This application claims priority to Chinese Patent Application No. 200610157775.5, filed on December 27, 2006, entitled "Method and Device for Avoiding Label Collision in PBT Controlled by GMPLS". The contents of the above identified application are incorporated herein by reference in their entirety.

### FIELD OF THE TECHNOLOGY

The present invention relates to the communication technical field, and more particularly to a method and device for avoiding label collision in provider backbone transport (PBT) controlled by generalized multi-protocol label switching (GMPLS).

### BACKGROUND

Currently, the Ethernet technologies dominate in the data switching technologies in data networks because of the rapid development, high efficiency, low cost, and high reliability of the Ethernet technologies, and based on the same reasons, the Ethernet has been entering the metropolitan area network (MAN) and will be hopefully networked into the metropolitan Ethernet. In the metropolitan Ethernet, the Ethernet provides a basis for a data transport technology, that is, the provider backbone transport (PBT) technology in the form of provider backbone bridge (PBB). In the PBT, the forwarding methods for Ethernet data frames are basically the same as that in the conventional Ethernet bridge, except that: (1) the PBT prohibits the use of the spanning tree protocol (STP) of the conventional Ethernet bridge and extended protocols thereof; (2) the PBT uses a forwarding table configured statically, and thus the PBT disables the source media access control (MAC) address self-learning function of the conventional Ethernet bridge; and (3) the PBT uses a forwarding table configured statically, and thus the PBT disables the flooding function of the conventional Ethernet bridge in the same virtual local area network (VLAN) after the destination MAC address matching fails.

The forwarding table of a PBT device may be configured with two methods. One is manual configuration through a network management apparatus or a command line interface of the device, and the other is signaling automatic configuration. For an operator, the manual configuration causes a rather high maintenance cost as the scale of the metropolitan Ethernet expands rapidly, and thus, the signaling automatic configuration becomes the best choice for configuring the metropolitan Ethernet. The Internet engineering task force (IETF) is developing and defining a standard for signaling automatic configuration of PBT devices.

In the signaling standard developed by the IETF, general multi protocol label switch (GMPLS) is used to control the establishment of a PBT label switched path (LSP). This standard supports point-to-point (P2P) and point-to-multipoint (P2MP) bi-directional PBT LSPs, adopts the destination MAC address of an Ethernet frame plus the VLAN identity as a label, and specifies that the label has a global sense in a domain, that is, it is not allowed that two different PBT LSPs use the same label in the domain. The standard also specifies that the PBT LSP is established by using the signaling of the GMPLS, that is, the resource reservation protocol-traffic engineering (RSVP-TE).

Figure 1 shows a network topology of an example of establishing the PBT LSP by using GMPLS in the metropolitan Ethernet, in which nodes E1, E4, E6, E7, and E8 are edge nodes, that is, PE nodes, and nodes E2, E3, and E5 are core nodes, that is, P nodes.

Figure 2 shows a process for establishing an LSP of E1<->E2<->E3<->E6 by using GMPLS RSVP-TE signaling, which is situation of establishing a P2P bi-directional LSP and a P2MP bi-directional LSP based on definite multicast source/destination IP addresses.

First, the PE node E1 issues an RSVP-TE Path message, and attempts to establish a connection. In the message, the node E1 issues a label of a reverse path through an upstream label object, and issues a label of a forward path through a label object. The destination MAC address in the upstream label object uses the MAC address of the node E1, and the VLAN identity uses an available VLAN selected by the upstream label object. To establish a P2P LSP, the destination MAC address in the suggested label object uses the MAC address of the LSP egress node E6. To establish a P2MP LSP, the destination MAC address in the suggested label object uses the multicast MAC address obtained by mapping a multicast group IP address. The upstream label and the suggested label should be consistent on all nodes along the entire path (that is, E1, E2, E3, and E6). The upstream label is assigned by the node E1 to be used on the reverse path LSP (E6->E3->E2->E1), and the suggested label is suggested by the node E1 to be used on the forward path LSP (E1->E2->E3->E6).

If a downstream node, such as E3, finds that the suggested label and/or upstream label from the PE node E1 has been used by another LSP, that is, label collision occurs, the node E3 sends an error alarm message to all upstream nodes along the reverse path. After receiving the error alarm message, the initial node of the LSP selects another suggested label and/or upstream label and attempts to reestablish the LSP.

If the label collision does not occur until the egress node E6 of the LSP, the E6 performs the resource reservation after receiving the RSVP-TE Path message from the E3, and issues an RSVP-TE Resv message along a reverse direction to notify all the upstream nodes on the reverse path to perform the resource reservation, label confirmation, and connection establishment.

In the standard for GMPLS controlling PBT developed by the IETF, the initial node of the LSP selects an appropriate VLAN identity in a range of local VLAN identity/destination MAC address as the VLAN of the label, and uses the MAC address thereof as the MAC address in the upstream label. As for a P2P situation, the MAC of the egress node is used as the destination MAC address; as for the P2MP situation, the multicast MAC address obtained by mapping the multicast IP address is used as the destination MAC address. In the Ethernet, the mapping of an IPv4 address to the multicast MAC address refers to directly copying low 23 bits of the IPv4 multicast address to the low 23 bits of the MAC address; as the valid address space of the IPv4 multicast address is 28 bits, one multicast MAC address is corresponding to 32 IPv4 multicast addresses. At this time, if the initial nodes of different LSPs select the same VLAN identity to form the label, the following three collisions will occur: (1) it is found that the upstream label of one P2P LSP is repeated with the suggested label of another P2P LSP at an intermediate cross node; (2) it is found that the suggested label of one P2P LSP is repeated with the suggested label of another P2P LSP at an intermediate cross node, and more precisely, this situation occurs when a multipoint-to-point LSP is established; (3) it is found that the suggested label of one P2MP LSP is repeated with the suggested label of another P2MP LSP at an intermediate node or the egress node.

In the prior art, the available VLAN identity/destination MAC address range is statistically configured manually on the PBT device during the network planning to avoid collision. However, the prior art has the following disadvantages. The prior art significantly limits the scale of the deployed PBT network, and is essentially a method of statistic planning configuration, in which once a new PBT device is added, the VLAN identity/destination MAC address range in the whole metropolitan Ethernet domain must be planned and configured again, which is time-consuming and causes obvious maintenance cost. The prior art significantly limits the service deployment based on PBT, and is essentially a method of statistic planning configuration, in which once a new service is launched, the VLAN identity/destination MAC address range in the whole metropolitan Ethernet domain must be planned and configured again. For the operator of the metropolitan Ethernet, one LSP is corresponding to an upper layer service (such as VPN), and thus the prior art is time-consuming and causes obvious maintenance cost. The prior art has a low utilization for the VLAN identity space, and uses the VLAN through a statistic planning configuration; however, the metropolitan Ethernet must be compatible with conventional Ethernet bridge devices while providing the PBT service, and the PBT is distinguished from the conventional Ethernet bridge devices through VLAN identity. After assigning a part of the limited VLAN resources (<4096) to the conventional Ethernet bridge, the VLAN resources should be assigned to each of the PBT. Along with the expansion of the Ethernet, the prior art for avoiding label collision causes increasingly less VLAN resources for PBT in each Ethernet device, and at the same time, some idle VLAN resources will not be released automatically. The prior art is unable to solve the label collision caused by a many-to-one relation between the multicast IP addresses and the multicast MAC address. Different multicast groups may be corresponding to the same multicast MAC address, and once the root nodes of the P2MP LSP adopt the same VLAN identity, the label collision is unavoidable on the cross node of two or more P2MP LSPs. Therefore, the dynamic multicast services cannot be predicted when performing network planning.

### SUMMARY

The present invention is directed to a method and device for avoiding label collision in PBT controlled by GMPLS, which prevent or reduce the label collisions in PBT controlled by GMPLS.

An embodiment of the present invention provides a method for avoiding label collision in PBT controlled by GMPLS. The method is as follows.

A label to be assigned is selected for a label switched path (LSP) to be established.

It is judged whether the label selected from labels to be assigned is repeated with assigned labels. Another label is selected from the labels to be assigned, if the label selected from labels to be assigned is repeated with the assigned labels; and the selected label is used as the label of the LSP, if the label selected from labels to be assigned is not repeated with the assigned labels.

An embodiment of the present invention further provides a device for avoiding label collision in PBT controlled by GMPLS. The device includes a label selecting module, a label judging module, and a label assigning module.

The label selecting module is adapted to select a label to be assigned for an LSP to be established.

The label judging module is adapted to judge whether the label selected by the label selecting module is repeated with assigned labels.

The label assigning module is adapted to assign the label to the LSP for use when the label judging module judges that the label to be assigned selected by the label selecting module for the LSP is not repeated with the assigned labels.

In the technical solutions provided in the present invention, PBT labels are managed as a global resource, so as to provide good support to PBT expansion of a metropolitan Ethernet. The technical solutions are adaptive to the expansion of the network, and do not limit the expansion of the metropolitan Ethernet. Moreover, the present invention is further advantageous to the service deployment based on the PBT, as the present invention is adaptive to the service deployment based on the PBT without limiting the number of the services deployed by the PBT, and thus utilization to a VLAN space is improved. In addition, in the technical solutions provided in the present invention, the VLAN space is available to all PBT devices, so as to avoid the situation that VLAN resources of some PBT devices are idle while other PBT devices lack the VLAN resources. According to the present invention, the label collision due to a many-to-one relation between multicast IP addresses and a multicast MAC address may be avoided or reduced.

### BRIEF DESCRIPTION OF THE DRAWINGS

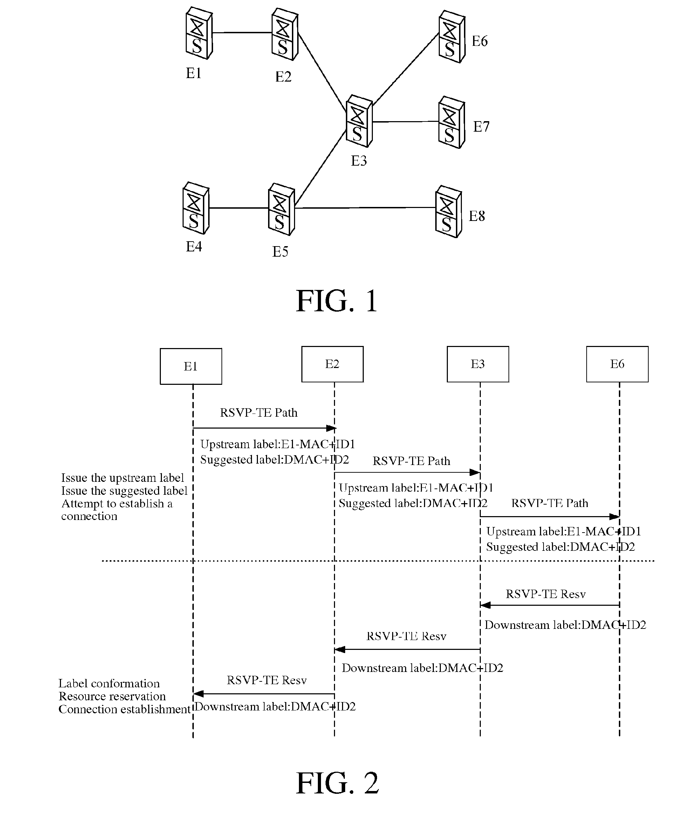

Figure 1 is a network topology view of an example of establishing PBT LSP in a metropolitan Ethernet by using GMPLS;

Figure 2 is a flow chart of an example of establishing PBT LSP in the metropolitan Ethernet by using GMPLS in the prior art;

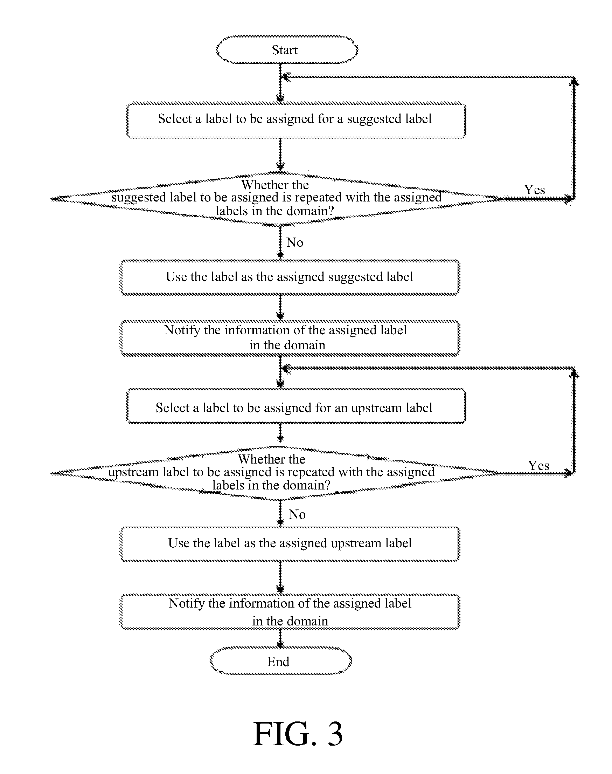

Figure 3 is a flow chart of the implementation according to a first embodiment of the present invention;

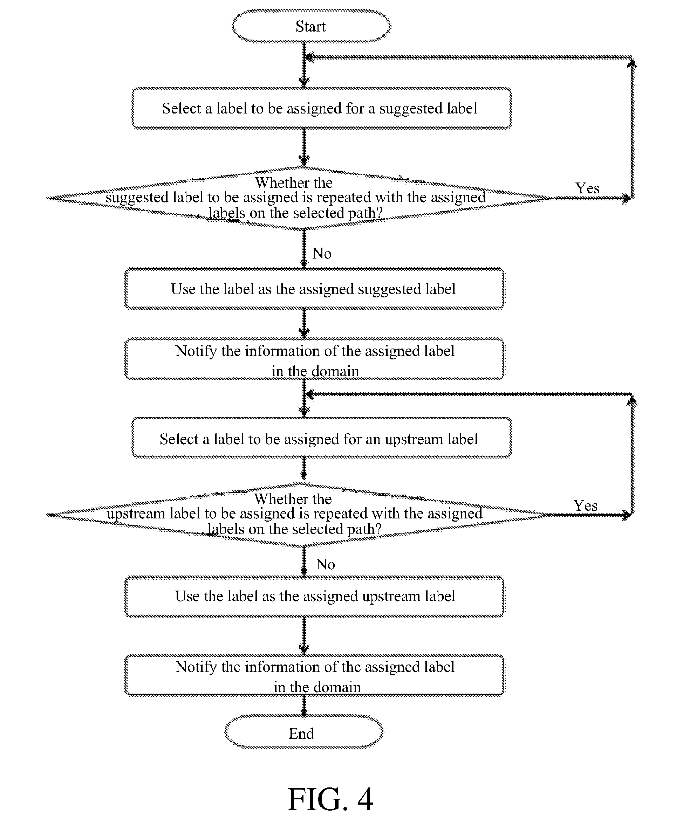

Figure 4 is a flow chart of the implementation according to a second embodiment of the present invention;

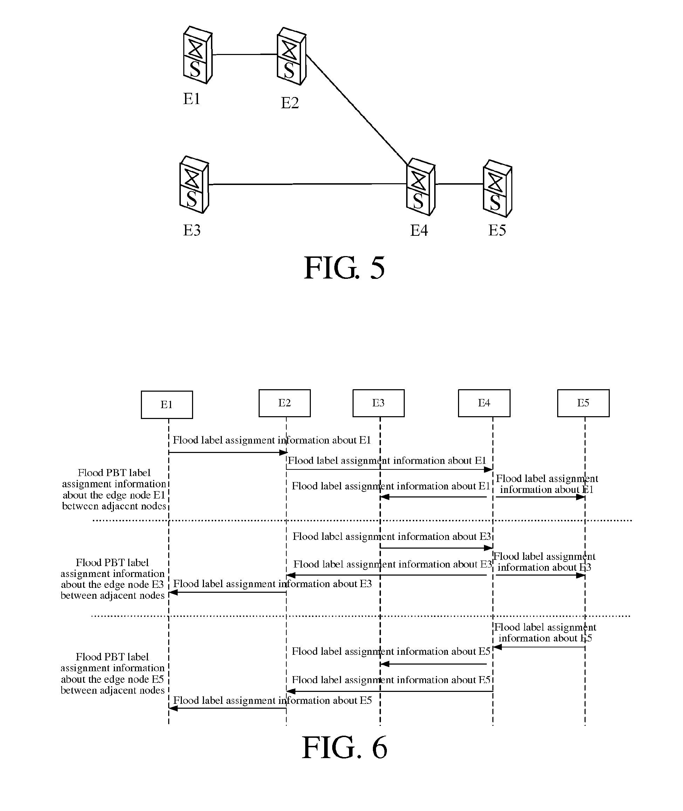

Figure 5 is a network topology view according to a third embodiment of the present invention;

Figure 6 is a schematic view showing that an edge node floods the information of the assigned label thereof in the domain according to the third embodiment of the present invention;

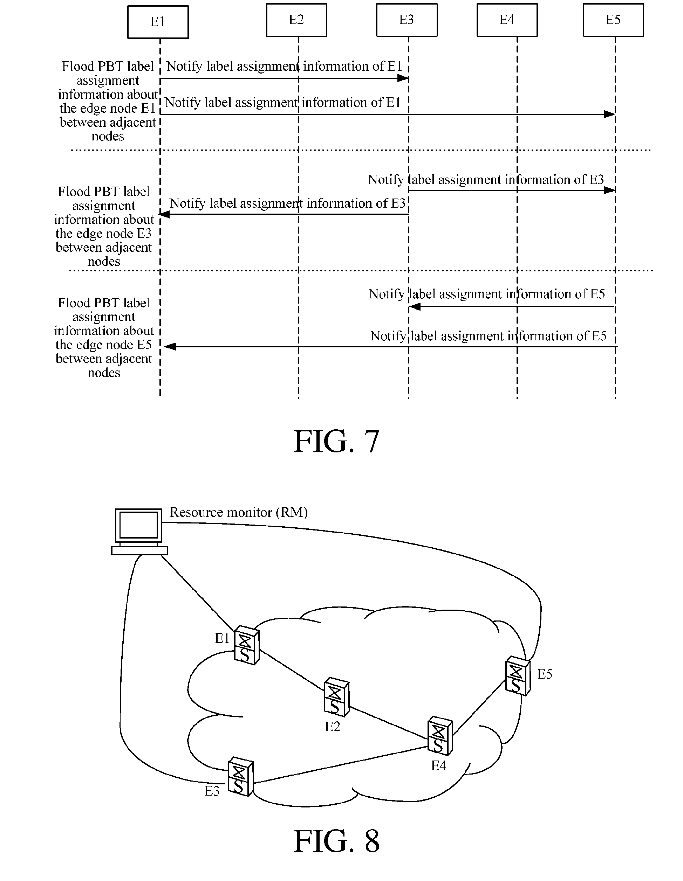

Figure 7 is a schematic view showing that an edge node notifies the information of the assigned label thereof to other edge nodes according to the third embodiment of the present invention;

Figure 8 is a network topology view according to a fourth embodiment of the present invention;

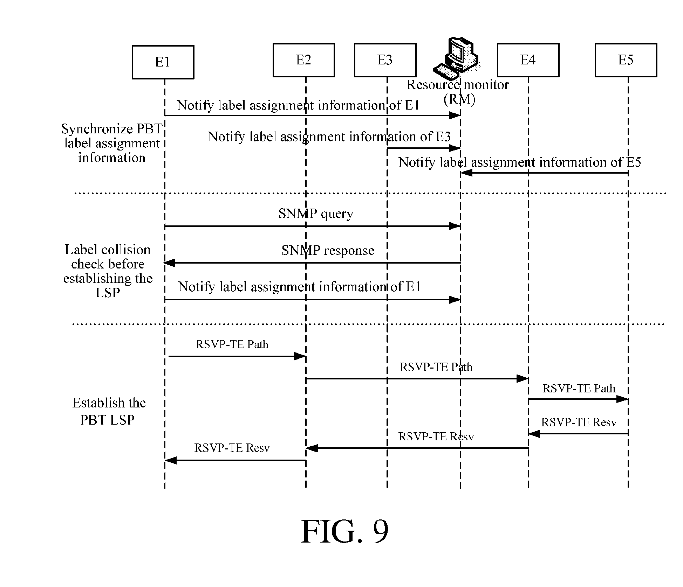

Figure 9 is a flow chart of a first implementation according to the fourth embodiment of the present invention; and

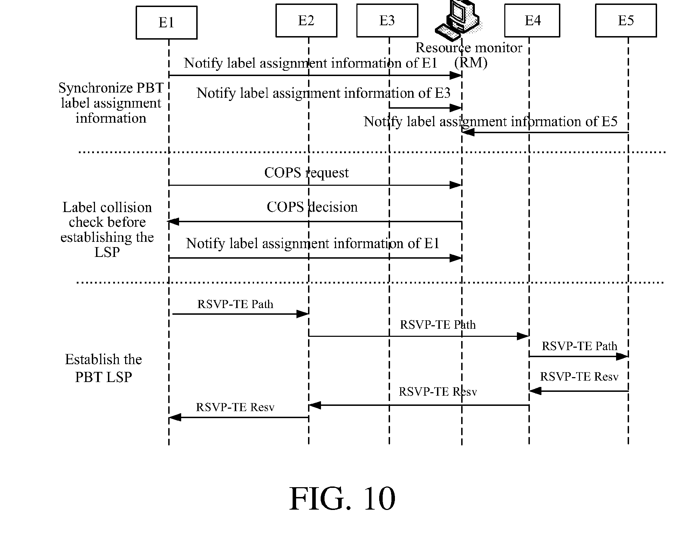

Figure 10 is a flow chart of a second implementation according to the fourth embodiment of the present invention.

### DETAILED DESCRIPTION

In order to make the purposes, technical solutions, and advantages of the present invention more comprehensible, the present invention is further described in detail below with reference to accompanying drawings. It should be understood that the embodiments described here only intend to explain the present invention instead of limiting the present invention.

Figure 3 shows a method for avoiding label collision in PBT controlled by GMPLS according to a first embodiment of the present invention. The method is as follows.

Step S11: A label to be assigned is selected for a suggested label.

Step S12: It is judged whether the label is repeated with assigned labels in a domain, and if a collision occurs, the process proceeds to step S11; otherwise, the process proceeds to step S 13.

Step S13: The label is used as the suggested label of an LSP to be established.

Step S14: The information of the label of the LSP, including VLAN information, destination MAC address information, initial node identity and/or identities of all other PBT nodes on the LSP, is notified in the domain, that is, the information of the label of the LSP is issued as one of the assigned labels in the domain.

Step S 15: A label to be assigned is selected for an upstream label.

Step S16: It is judged whether the label is repeated with the assigned labels in the domain, and if a collision occurs, the process proceeds to step S15; otherwise, the process proceeds to step S17.

Step S17: The label is used as the upstream label of the LSP to be established.

Step S18: The information of the label of the LSP, including VLAN information, destination MAC address information, initial node identity and/or identities of all other PBT nodes on the LSP, is notified in the domain, that is, the information of the label of the LSP is issued as one of the assigned labels in the domain.

Figure 4 shows a method of avoiding label collision in PBT controlled by GMPLS according to a second embodiment of the present invention. The method is as follows.

Step S21: A label to be assigned is selected for a suggested label.

Step S22: It is judged whether the label is repeated with assigned labels on a selected path, and if a collision occurs, the process proceeds to step S21; otherwise, the process proceeds to step S23.

Step S23: The label is used as the suggested label of the LSP to be established.

Step S24: The information of the label of the LSP, including VLAN information, destination MAC address information, initial node identity and/or identities of all other PBT nodes on the LSP, is notified in the domain, that is, the information of the label of the LSP is used as one of the assigned labels in the domain.

Step S25: A label to be assigned is selected for an upstream label.

Step S26: It is judged whether the label is repeated with the assigned labels on the selected path, and if a collision occurs, the process proceeds to step S25; otherwise, the process proceeds to step S27.

Step S27: The label is used as the upstream label of the LSP to be established.

Step S28: The information of the label of the LSP, including VLAN information, destination MAC address information, initial node identity and/or identities of all other PBT nodes on the LSP, is notified in the domain, that is, the information of the label of the LSP is issued as one of the assigned labels in the domain.

In the above two embodiments, the uniqueness of the suggested label is determined first and the uniqueness of the upstream label is determined later; however, the order of the two is not limited in the present invention. That is, the uniqueness of the upstream label may be determined first and the uniqueness of the suggested label is determined later, or the uniqueness of the two are determined at the same time, which all fall in the protection scope of the present invention.

In the above two embodiments, "issued in the domain" refers to that the label information and the assigned information are viewable globally in the metropolitan Ethernet, and the information is issued by flooding in the domain (for example, through an OSPF-TE mechanism), or notifying between all edge nodes (for example, through a BGP mechanism), or only notifying a centralized resource monitor (RM).

In the above two embodiments, it is only described that the information of the assigned labels is issued in the domain, and after the established LSP is used and disconnected, the label used by the LSP is released, and the released label is put into the label pool to be assigned for another assignment. The embodiment of the present invention further includes issuing the information of the released label in the domain.

Figure 5 shows a third embodiment of the present invention, in which the assigned PBT label sets in the domain are maintained in a distributed mode, every node or edge node in the domain maintains the same copy, and whether the selected label is repeated with the assigned labels is queried directly on the local device. This embodiment is described in detail as follows.

The information of the assigned labels of all edge nodes is flooded to all nodes in the domain or notified to all other edge nodes, and similarly, the information of released labels of all edge nodes are flooded to all the nodes in the domain or notified to all other edge nodes. Thus, a real-time dynamic database of all assigned labels in the current domain is formed on each edge node, and each edge node may check whether the label to be assigned is repeated with the assigned labels on the selected path from a local storage module before a new LSP is established, thereby ensuring that the selected label is new.

Figure 6 shows an example of an edge node flooding the information of the assigned label thereof in the domain. The information of the assigned label (including VLAN information, destination MAC address information, initial node identity and/or identities of all other PBT nodes on the LSP) may be flooded in the domain through a flooding mechanism such as OSPF-TE or IS-IS-TE, and the information of the assigned labels may be transparent to intermediate nodes.

Figure 7 shows an example of the edge node notifying the information of the assigned label thereof to all other edge nodes. The information of the assigned label (including VLAN information, destination MAC address information, initial node identity and/or identities of all other PBT nodes on the LSP) may be synchronized through a BGP notification mechanism, and the information of the assigned labels may be totally transparent to intermediate nodes.

Figure 8 shows a fourth embodiment of the present invention, in which the assigned PBT label sets in the domain are maintained in a distributed mode, and whether the selected label is repeated with the assigned labels is queried on centralized devices. The centralized devices may perform backup by using a plurality of devices. This embodiment is described in detail as follows.

The information of the assigned labels of all edge nodes is synchronized to a centralized RM, and similarly, the information of the released labels of all the edge nodes is synchronized to the RM. Thus, a real-time dynamic database of all the assigned labels in a current domain is formed on the RM, and each edge node may check whether the label to be assigned is repeated with the assigned labels in the domain or on the selected path on the RM before establishing a new LSP, thereby ensuring that the selected label is new.

Figure 9 shows a procedure that the edge node synchronizes the information of the assigned labels to the RM, and queries the RM through a simple network management protocol (SNMP) to check whether the label to be assigned is repeated with the assigned labels in the domain or on the selected path, and finally establishes an LSP.

Figure 10 shows a procedure that the edge node synchronizes the information of the assigned labels to the RM, and queries the RM through a common open policy service (COPS) protocol to check whether the label to be assigned is repeated with the assigned labels in the domain or on the selected path, and finally establishes an LSP.

The embodiment of the present invention further provides a device for avoiding label collision in PBT controlled by GMPLS, which includes a label selecting module, a label judging module, and a label assigning module.

The label selecting module is adapted to select a label to be assigned for an LSP to be established.

The label judging module is adapted to judge whether the label is repeated with the assigned labels.

The label assigning module is adapted to assign the label to the LSP for use.

The device for avoiding label collision in PBT controlled by GMPLS according to the embodiment of the present invention further includes a label issuing module.

The label issuing module is adapted to issue the label of the LSP as one of the assigned labels in the domain, and is further adapted to issue the released label in the domain.

The device for avoiding label collision in PBT controlled by GMPLS according to the embodiment of the present invention further includes a storage module.

The storage module is adapted to store the assigned labels, and the storage module is located on each edge node or located on the RM.

In the embodiments of the present invention, PBT labels are managed as a global resource, so as to provide good support to the expansion of the PBT of the metropolitan Ethernet. The embodiments of the present invention are adaptive to the expansion of the network, so the present invention will not limit the expansion of the metropolitan Ethernet. Moreover, the embodiments of the present invention provide good support to the service deployment based on the PBT, and are adaptive to the service deployment based on the PBT without limiting the number of the services deployed by the PBT. In addition, the embodiments of the present invention enhance the utilization to the VLAN space, and in the embodiments of the present invention, the VLAN space is available to all PBT devices, so as to avoid the situation that the VLAN resources of some PBT devices are idle while other PBT devices lack the VLAN resource. According to the embodiments of the present invention, the label collision due to a many-to-one relation between multicast IP addresses and a multicast MAC address is solved.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for avoiding label collision in provider backbone transport (PBT) controlled by generalized multi-protocol label switching (GMPLS), comprising:
selecting a label to be assigned for a label switched path (LSP) to be established; and
judging whether the label selected from labels to be assigned is repeated with assigned labels, selecting another label from the labels to be assigned, if the label selected from labels to be assigned is repeated with the assigned labels, and using the selected label as the label of the LSP, if the label selected from labels to be assigned is not repeated with the assigned labels.

2. The method according to claim 1, further comprising:
issuing the label of the LSP as one of the assigned labels in a domain.

3. The method according to claim 1, wherein it is determined that the label of the LSP is repeated with one of the assigned labels, if the label of the LSP is an assigned label in a domain or an assigned label on a selected path.

4. The method according to claim 1 or 2, further comprising:
releasing the label of the LSP after the established LSP is used and disconnected, and issuing the released label in a domain.

5. The method according to claim 4, wherein the issuing the assigned labels or the released label in the domain is performed in one of following manners:
flooding in the domain, notifying among all edge nodes or notifying to a centralized resource monitor (RM).

6. The method according to claim 1, wherein information of the assigned labels are obtained by querying the edge nodes or querying the RM.

7. The method according to claim 4, wherein information of the assigned labels or the released label issued in the domain comprises at least one of the following:
virtual local area network (VLAN) information, destination media access control (MAC) address information, an initial node identity and identities of all other backbone nodes on the LSP.

8. A device for avoiding label collision in provider backbone transport (PBT) controlled by generalized multi-protocol label switching (GMPLS), comprising:
a label selecting module, adapted to select a label to be assigned for a label switched path (LSP) to be established;
a label judging module, adapted to judge whether the label selected by the label selecting module is repeated with assigned labels; and
a label assigning module, adapted to assign the label to the LSP for use when the label judging module judges that the label to be assigned selected by the label selecting module for the LSP is not repeated with the assigned labels.

9. The device according to claim 8, further comprising:
a label issuing module, adapted to issue the label of the LSP as one of the assigned labels in a domain and issue a released label in the domain.

10. The device according to claim 9, wherein the label issuing module issues information of the assigned labels or the released label in the domain in one of following manners:
flooding in the domain, notifying between all edge nodes or notifying to a centralized resource monitor (RM).

11. The device according to claim 9, wherein information of the assigned labels or the released label issued in the domain comprises at least one of the following:
virtual local area network (VLAN) information, destination media access control (MAC) address information, an initial node identity, and identities of all other backbone nodes on the LSP.

12. The device according to claim 8, further comprising:
a storage module, adapted to store the assigned labels for the label judging module to use when the label judging module judges following labels to be assigned.
